# EUROPÄISCHE PATENTSCHRIFT

(11) **EP 2 452 318 B1**
(45) Veröffentlichungstag und Bekanntmachung des Hinweises auf die Patenterteilung: **22.02.2017**
(21) Anmeldenummer: 10742249.5
(22) Anmeldetag: 25.06.2010
(51) Int. Cl.: G07F 17/32, G07F 19/00

(54) **VORRICHTUNG ZUR ABWICKLUNG VON GELDGESCHÄFTEN**
DEVICE FOR CONDUCTING MONETARY TRANSACTIONS
DISPOSITIF PERMETTANT D'EFFECTUER DES OPÉRATIONS FINANCIÈRES

(30) Priorität: 09.07.2009 DE 202009009470 U
(43) Veröffentlichungstag der Anmeldung: 16.05.2012
(73) Patentinhaber: Novomatic AG, 2352 Gumpoldskirchen (AT)
(72) Erfinder: MÜHRENBERG, Roland, A-2352 Gumpoldskirchen (AT); ZANDER, Marko, A-2352 Gumpoldskirchen (AT); BORNSCHEIN, Jürgen, A-2352 Gumpoldskirchen (AT); RINDERSPACHER, Marc, A-2352 Gumpoldskirchen (AT)
(74) Vertreter: Müller, Jochen
(86) Internationale Anmeldenummer: PCT/IB2010/001552
(87) Internationale Veröffentlichungsnummer: WO 2011/004231

(56) Entgegenhaltungen:
- EP-A1- 1 016 950
- EP-A1- 1 686 549
- WO-A1-01/24519
- US-A1- 2006 014 586

## Beschreibung

Die Erfindung betrifft eine Vorrichtung zur Abwicklung von Geldgeschäften, wie bei Kassenautomaten, Geldautomaten, Geldwechsler, Währungswechsler, Spielautomaten oder Ähnliches, mittels welchen Geldgeschäfte oder Ähnliches abgewickelt werden können.

Vorrichtungen zur Abwicklung von Geldgeschäften sind beispielsweise Kassenautomaten, Supermarktkassenautomat, Bankautomat, Geldautomaten, Geldwechsler, Währungswechsler, Vendingautomaten, Spielautomaten, Automaten für den bargeldlosen oder bargeldbehafteten Zahlungsverkehr oder Wechselverkehr, Check-In-oder Check-Out-Terminal oder Ähnliches.

Bei Unterhaltungselektronikvorrichtungen sind einstellbare Bildschirme bekannt geworden, bei welchen der Bildschirm eines Computers oder Notebooks manuell verstellt werden kann, um einen bestmöglichen Betrachtungswinkel für einen Benutzer an einer Position zu ermöglichen. Auch sind Fernsehgeräte bekannt geworden, bei welchen eine Verstellung motorisch angetrieben durchgeführt werden kann.

EP1016950A1 offenbart einen verstellbaren Bildschirm, insbesondere bezieht sie sich auf ein Adjustieren eines Liquid Crystal Displays (LCD) in Bezug auf einen Bildschirmfuß beziehungsweise eine Bildschirmhalterung. Das Adjustieren erfolg mit der Hilfe eines Elektromotors, welcher eine Schneckenrad antreibt, welches seinerseits mit einem bogenförmig am Fuß angeordneten Zahnlochgetriebe gekoppelt ist. Das Adjustieren ist in Form einer Wipp-Bewegung möglich.

Darüber hinaus beschreibt die US 2006/014 586 A1 eine Bildschirmanordnung in einem Rahmen, die an einem mit einem Fuß verbundenen Ständer manuell dreh- oder neigbar angeordnet ist, wobei die Bildschirmanordnung mit ihrer Rückseite dem Ständer gelenkig zugeordnet ist.
Im Weiteren zeigt die EP 1 686 549 A1 ein Spielgerät mit einem in einem Gehäuse höhenverstellbar angeordneten Bildschirm. Ein den Bildschirm in seiner Höhenlage relativ zu dem Gehäuse verlagernder Motor wird mittels Daten eines Infrarotsensors angesteuert, wobei der Infrarotsensor feststellt, ob ein Benutzer vorhanden ist, und in welcher Höhe sich das Ende des Kopfes des Benutzers befindet.

Ferner offenbart die WO 01/24519 A1 eine Anzeigeeinrichtung, die zur Vermeidung von Blendungen oder Reflexionen kreuzgelenkig in einem Rahmen gelagert ist. Die Anzeigeeinrichtung ist manuell um eine horizontale und eine vertikale Achse verschwenkbar.

Bei Vorrichtungen zur Abwicklung von Geldgeschäften, wie bei Kassenautomaten, Geldautomaten, Geldwechsler, Währungswechsler, Spielautomaten oder Ähnliches, mittels welchen Geldgeschäfte abgewickelt werden können, ist im Stand der Technik entweder kein Bildschirm, sondern nur eine Anzeige oder nur ein starr eingebauter Bildschirm vorgesehen. Dies bringt jedoch den Nachteil, dass der Bildschirm je nach Größe des Betrachters und Beleuchtungssituation zum Teil nicht gut ablesbar ist. Dadurch wird die Benutzerfreundlichkeit herabgesetzt und die Akzeptanz solcher Vorrichtungen reduziert.

Es ist die Aufgabe der Erfindung, eine Vorrichtung zur Abwicklung von Geldgeschäften mit einem Gehäuse und einem im Gehäuse aufgenommenen Bildschirm zu schaffen, bei welchen eine optimale Nutzung des Bildschirmes durch verschieden große Benutzer unter Vermieden des Auftretens von Reflexionen durch Verstellung des Bildschirms möglich sein sollte.

Dies wird erreicht mit den Merkmalen von Anspruch 1, wonach eine Vorrichtung zur Abwicklung von Geldgeschäften ein Gehäuse und einen in einem Gehäuse aufgenommenen Bildschirm umfasst, wobei der Bildschirm gegenüber dem Gehäuse bezüglich einer horizontalen und/oder einer vertikalen Achse drehbar und/oder neigbar
ist, derart dass ein Verändern der Neigung des Bildschirms automatisiert erfolgt, wobei die Achsen im Wesentlichen in der Ebene der Bildschirmfläche liegen, und mit einer Motorsteuerung zur Adjustierung des Bildschirms , wobei die Motorsteuerung eine mit dem Bildschirm gekoppelte Antriebseinheit steuert. Die Vorrichtung umfasst weiterhin
- Betrachtungswinkelermittlungsmittel zum Ermitteln eines Betrachtungswinkels eines vor dem Bildschirm befindlichen Benutzers mit Hilfe von Bildern einer Kamera und einem Gesichtserkennungsalgorithmus, und
- Reflexionswinkelermittlungsmittel zum Ermitteln eines Reflexionswinkels einer auf den Bildschirms leuchtenden Strahlungsquelle, wobei abhängig von der Tages- und Jahreszeit auf die Position der Sonne bzw. auf den Einstrahlwinkel auf den Bildschirm bzw. die Bildschirmoberfläche schließbar ist, um die Winkelstellung der Sonne in Relation zum Bildschirm über die Tageszeit hinweg zu bestimmen, wobei eine aktuelle
   Tageszeit anhand einer
   hardwaremäßigen oder softwaremäßigen Echtzeituhr ermittelbar sowie der dazu gespeicherte Sonneneinstrahlwinkel aus Speichermitteln abrufbar ist, wobei eine Kalibrierung mit Hilfe von Kalibrierungsmitteln vornehmbar ist und zur Kalibrierung ein Sensormodul Lichtsensoren umfasst, mit denen während eines Zeitraumes, beispielsweise eines Tages, die Intensität der Sonneneinstrahlung messbar ist, und
- Monitorwinkelermittlungsmittel zum Ermitteln einer Monitorwinkelverstellinformation anhand der ermittelten Betrachtungswinkel und Reflexionswinkel, die an die Motorsteuerung ausgebbar ist.
Dadurch kann der Benutzer der Vorrichtung den Bildschirm automatisiert derart einstellen, dass er den Bildschirm optimal ablesen kann und auftretende unerwünschte Reflexionen vermindert oder verhindert werden können.

Der Grad der Reflexion von Sonneneinstrahlung bzw. anderer Lichtquellen erschwert das Lesen von Informationen auf einem Bildschirm und ist maßgeblich bestimmt durch den Winkel der Lichtquelle zum Bildschirm beziehungsweise Monitor und dem Winkel der Augen des Betrachters zum Bildschirm.

Vorteilhaft ist bei einem Ausführungsbeispiel, dass der Bildschirm gegenüber dem Gehäuse bezüglich der horizontalen Achse neigbar ist, wobei die Achse im mittigen Bereich des Bildschirms angeordnet ist. Vorteilhaft ist bei einem weiteren Ausführungsbeispiel, dass der Bildschirm gegenüber dem Gehäuse bezüglich der horizontalen Achse neigbar ist, wobei die Achse im unteren Bereich des Bildschirms angeordnet ist. Vorteilhaft ist bei einem anderen Ausführungsbeispiel, dass der Bildschirm gegenüber dem Gehäuse bezüglich der horizontalen Achse neigbar ist, wobei die Achse im oberen Bereich des Bildschirms angeordnet ist.

Vorteilhaft ist bei einem Ausführungsbeispiel, dass der Bildschirm gegenüber dem Gehäuse bezüglich der vertikalen Achse drehbar ist, wobei die Achse im mittigen Bereich des Bildschirms angeordnet ist. Vorteilhaft ist bei einem weiteren Ausführungsbeispiel, dass der Bildschirm gegenüber dem Gehäuse bezüglich der vertikalen Achse drehbar ist, wobei die Achse im seitlich rechten Bereich des Bildschirms angeordnet ist. Vorteilhaft ist bei einem Ausführungsbeispiel, dass der Bildschirm gegenüber dem
Gehäuse bezüglich der vertikalen Achse drehbar ist, wobei die Achse im seitlich linken Bereich des Bildschirms angeordnet ist.

Dadurch kann die Wahl der Achse an die Anforderungen der Vorrichtung angepasst werden, so dass bei verschieden großen Benutzern das Auftreten von Reflexionen gezielt durch Verstellung des Bildschirms vermieden werden kann.

Besonders vorteilhaft ist an der Rückseite des Bildschirms die Anordnung eines Kugelgelenks zur drehbaren und/oder neigbaren Halterung des Bildschirms an dem Gehäuse.

Vorteilhaft ist weiterhin, wenn die elektromotorische Betätigung des Bildschirms durch voreingestellte Daten oder Signale erfolgt. Dabei können diese Daten auf einem Datenträger, wie auf einem Speicherchip, gespeichert sein, so dass beim Eingeben des Datenträgers die Daten ausgelesen werden und die Verstellung anschließend automatisch erfolgt.

Vorteilhaft ist weiterhin, wenn die elektromotorische Betätigung des Bildschirms durch einen Sensor gesteuert wird, welcher erkennt ob und wie stark Reflexionen des Bildschirms für den Betrachter erkennbar sind.

Die vorstehend angeführten Aspekte und weitere Aspekte der Erfindung gehen aus dem nachfolgend beschriebenen Ausführungsbeispielen hervor und sind anhand dieser Ausführungsbeispiele erläutert.

Die Erfindung wird im Folgenden anhand von in den Zeichnungen dargestellten Ausführungsbeispielen weiter beschrieben, auf das die Erfindung jedoch nicht beschränkt ist. Es zeigen:
Fig. 1 eine schematische Darstellung eines Bildschirms mit der möglichen Anordnung von Drehachsen,
Fig. 2 eine schematische Darstellung eines Bildschirms mit der möglichen Anordnung von Drehachsen,
Fig.3a eine Ansicht einer Vorrichtung zur Abwicklung von Geldgeschäften, wie eines Kassenautomaten oder Ähnliches mit einem eingeklappten Bildschirm,
Fig.3b eine Ansicht einer Vorrichtung zur Abwicklung von Geldgeschäften, wie eines Kassenautomaten oder Ähnliches mit einem eingeklappten Bildschirm,
Fig.4a eine Ansicht einer Vorrichtung zur Abwicklung von Geldgeschäften, wie eines Kassenautomaten oder Ähnliches mit einem ausgeklappten Bildschirm,
Fig.4b eine Ansicht einer Vorrichtung zur Abwicklung von Geldgeschäften, wie eines Kassenautomaten oder Ähnliches mit einem ausgeklappten Bildschirm,
Figur 5 eine schematische Darstellung eines Bildschirms mit möglichen Anordnungen von Drehachsen, und
Figur 6 eine schematische Darstellung eines Bildschirms mit möglichen Anordnungen von Drehachsen, und
Figur 7 eine schematische Darstellung des Betrachtungswinkels eines Betrachters zum Monitor, und
Figur 8 und 9 eine schematische Darstellung des zeitabhängigen Einflusses des Einstrahlwinkels bzw. Reflexionswinkels der Sonne bzw. Lichtquelle vor dem Bildschirm, und
Figur 10 eine schematische Darstellung der Lichtsensoren am Bildschirm, und
Figur 11 eine schematische Darstellung der Funktionskomponenten der erfindungsgemäßen Vorrichtung, und
Figur 12 eine schematische Darstellung eines Ablauf der Kalibrierung, und
Figur 13 eine schematische Darstellung eines Ablaufes der Veränderung der Bildschirmneigung.

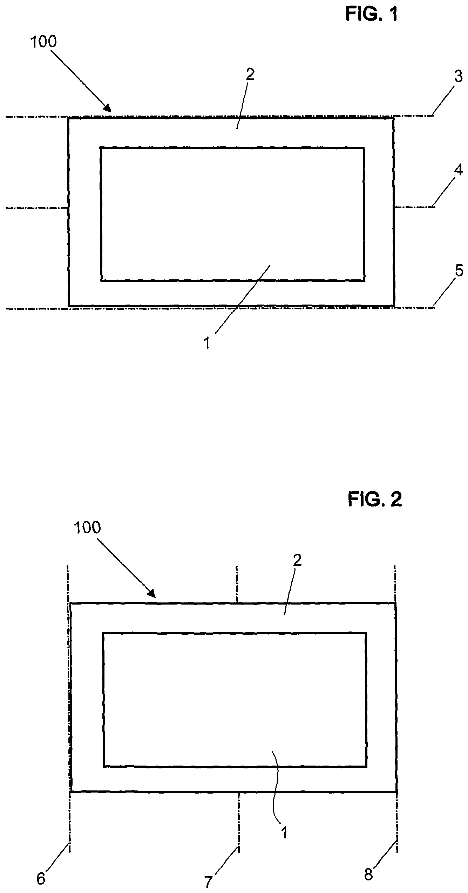

Die Figur 1 zeigt schematisch einen Bildschirm 100 mit einer Bildschirmfläche 1, auf welcher sich Daten, Text- oder Bildinformationen darstellen lassen. Die Bildschirmfläche 1 ist dabei vorzugsweise in einem Halterahmen 2 aufgenommen. Der Bildschirm 100 weist vorzugsweise an seiner Rückseite vorzugsweise zumindest eine Halterung oder mehrere Halterungen auf, welche derart gestaltet sind, dass der Bildschirm um eine horizontale Achse verdrehbar ist. Dabei kann die Achse mittig des Bildschirms 100 angeordnet sein, siehe Bezugszeichen 4. Bei einem anderen Ausführungsbeispiel kann die Achse im oberen Bereich des Bildschirms 100 angeordnet sein, siehe Bezugszeichen 3. Bei einem weiteren Ausführungsbeispiel kann die Achse im unteren Bereich des Bildschirms 100 angeordnet sein, siehe Bezugszeichen 5.

Die Figur 2 zeigt schematisch einen Bildschirm 100 mit einer Bildschirmfläche 1, auf welcher sich Daten, Text- oder Bildinformationen darstellen lassen. Die Bildschirmfläche 1 ist dabei vorzugsweise in einem Halterahmen 2 aufgenommen. Der Bildschirm 100 weist vorzugsweise an seiner Rückseite vorzugsweise zumindest eine Halterung oder mehrere Halterungen auf, welche derart gestaltet sind, dass der Bildschirm um eine vertikale Achse verdrehbar ist. Dabei kann die Achse mittig des Bildschirms 100 angeordnet sein, siehe Bezugszeichen 7. Bei einem anderen Ausführungsbeispiel kann die Achse im linken Bereich des Bildschirms 100 angeordnet sein, siehe Bezugszeichen 6. Bei einem weiteren Ausführungsbeispiel kann die Achse im rechten Bereich des Bildschirms 100 angeordnet sein, siehe Bezugszeichen 8.

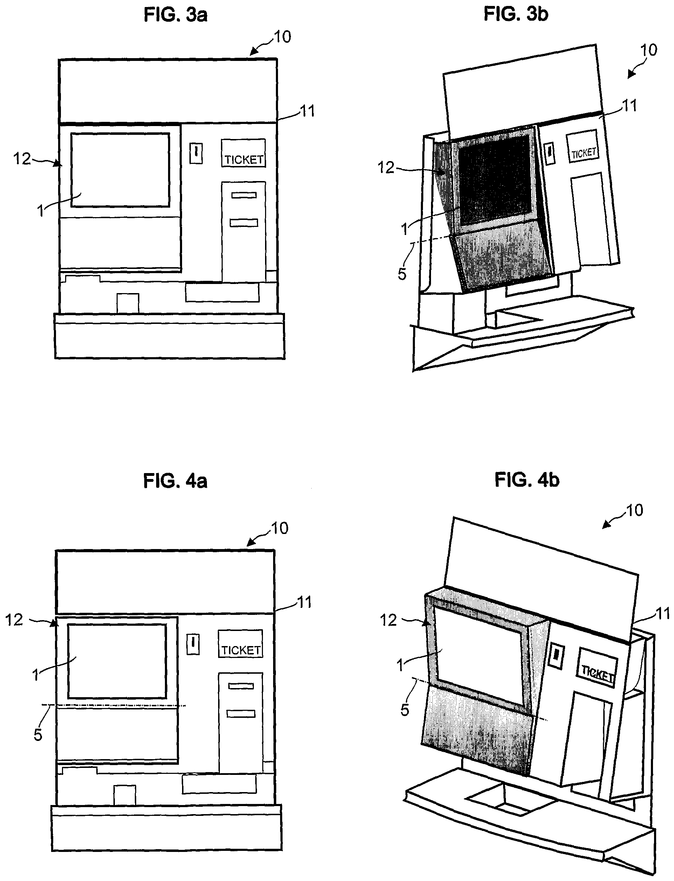

Die Figuren 3a und 3b zeigen eine Ansicht einer erfindungsgemäßen Vorrichtung zur Abwicklung von Geldgeschäften 10, wie eines Kassenautomaten oder Ähnliches, mit einem Gehäuse 11 und einem Bildschirm 12, welcher Bildschirm 12 in den Figuren 3a und 3b in einem eingeklappten Zustand gezeigt ist, wobei die Figur 3a eine Vorderansicht darstellt und die Figur 3b eine Schrägansicht. Der Bildschirm 12 ist hierbei senkrecht ausgerichtet und die Bildschirmfläche 1 ist im Wesentlichen eben mit der Gehäusefrontseite der Vorrichtung.

Die Figuren 4a und 4b zeigen eine Ansicht einer erfindungsgemäßen Vorrichtung zur Abwicklung von Geldgeschäften 10, wie eines Kassenautomaten oder Ähnliches, mit einem Gehäuse 11 und einem Bildschirm 12, welcher Bildschirm 12 in den Figuren 4a und 4b in einem ausgeschwenkten Zustand gezeigt ist. Der Bildschirm 12 ist dabei aus der senkrechten Position nach um eine untere horizontale Drehachse nach vorne geneigt und etwas schräg gestellt.

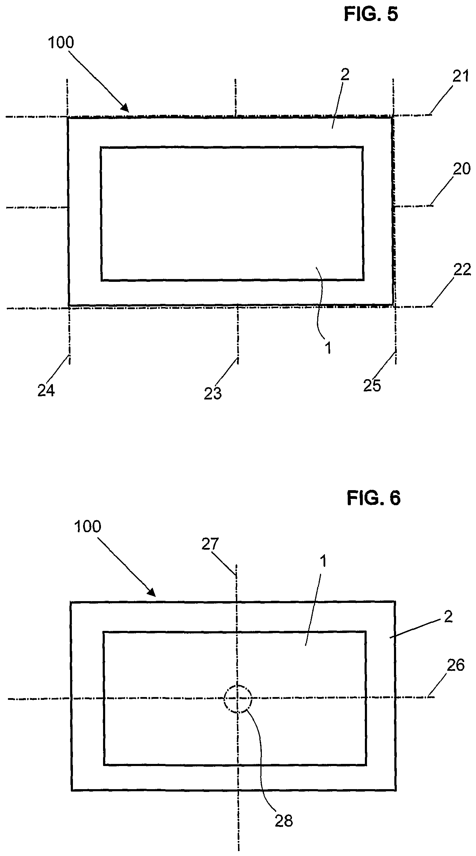

Die Figur 5 zeigt schematisch einen Bildschirm 100 mit einer Bildschirmfläche 1, auf welcher sich Daten, Text oder Bildinformationen darstellen lassen. Die Bildschirmfläche 1 ist dabei vorzugsweise in einem Halterahmen 2 aufgenommen. Der Bildschirm 100 weist vorzugsweise an seiner Rückseite vorzugsweise zumindest eine Halterung oder mehrere Halterungen auf, welche derart gestaltet sind, dass der Bildschirm um eine horizontale Achse verdrehbar ist. Dabei kann die Achse mittig des Bildschirms 100 angeordnet sein, siehe Bezugszeichen 20. Bei einem anderen Ausführungsbeispiel kann die Achse im oberen Bereich des Bildschirms 100 angeordnet sein, siehe Bezugszeichen 21. Bei einem weiteren Ausführungsbeispiel kann die Achse im unteren Bereich des Bildschirms 100 angeordnet sein, siehe Bezugszeichen 22. Weiterhin ist die zumindest eine Halterung derart gestaltet, dass der Bildschirm auch um eine vertikale Achse verdrehbar ist. Dabei kann die Achse mittig des Bildschirms 100 angeordnet sein, siehe Bezugszeichen 23. Bei einem anderen Ausführungsbeispiel kann die Achse im linken Bereich des Bildschirms 100 angeordnet sein, siehe Bezugszeichen 24. Bei einem weiteren Ausführungsbeispiel kann die Achse im rechten Bereich des Bildschirms 100 angeordnet sein, siehe Bezugszeichen 25.

Die Figur 6 zeigt schematisch einen Bildschirm 100 mit einer Bildschirmfläche 1, auf welcher sich Daten, Text oder Bildinformationen darstellen lassen. Die Bildschirmfläche 1 ist dabei vorzugsweise in einem Halterahmen 2 aufgenommen. Der Bildschirm 100 weist vorzugsweise an seiner Rückseite vorzugsweise zumindest eine Halterung auf, welche derart gestaltet sind, dass der Bildschirm um eine horizontale Achse 26 und um eine vertikale Achse 27 verdrehbar ist. Die Halterung ist dabei vorteilhaft als Kugelgelenk 28 ausgebildet, welches vorteilhaft mittig des Bildschirms angeordnet ist. Das Kugelgelenk 28 kann aber auch anderweitig, wie beispielsweise am unteren oder am oberen Bereich des Bildschirms angeordnet sein.

Vorteilhaft ist der Bildschirm ein Monitor, wie ein LCD-Monitor oder ein anderweitiger Monitor zur Darstellung von Daten, wie beispielsweise von Bild und/oder Textdaten.

Bei einem bevorzugten Ausführungsbeispiel kann die Verstellung sowohl manuell als auch motorisch erfolgen, wobei die manuelle Verstellung des Bildschirms nicht durch die Ansprüche umfasst ist.

Wie oben beschrieben ist der Bildschirm ein Bildschirm einer Vorrichtung zur Abwicklung von Geldgeschäften, wobei diese Vorrichtung ein Gehäuse aufweist und einen in das Gehäuse aufgenommenen Bildschirm. Der Bildschirm 100 ist dabei um eine horizontale und eine vertikale Achse dreh- und neigbar ausgestaltet ist, derart, dass die Neigung des Bildschirms automatisiert durchführbar ist.

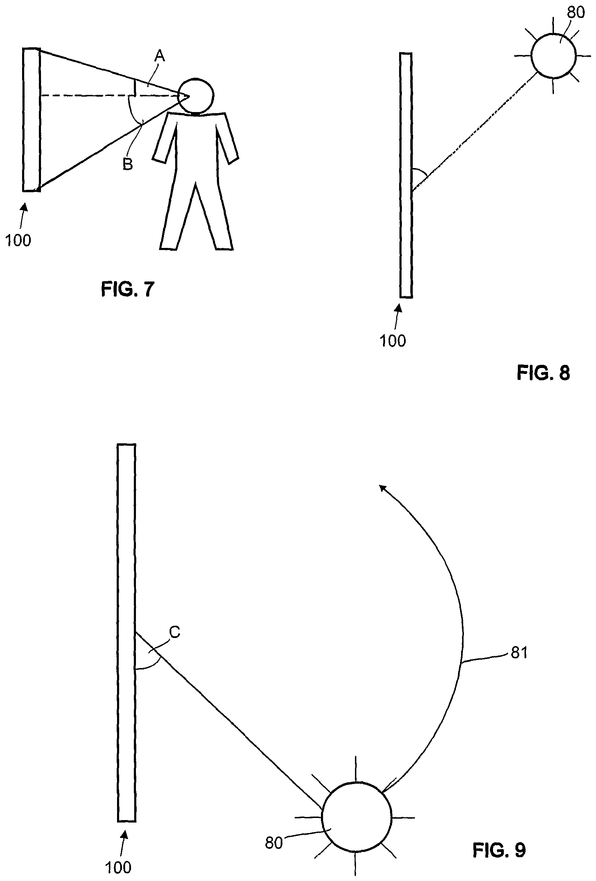

Der Grad der Reflexion von Sonneneinstrahlung bzw. anderer Lichtquellen erschwert das Lesen von Informationen auf einem Bildschirm und ist maßgeblich bestimmt durch den Winkel der Lichtquelle zum Bildschirm 100 beziehungsweise Monitor und dem Winkel A, B der Augen des Betrachters zum Bildschirm 100, vgl. Fig. 7.

Die Sonne 80 bzw. Lichtquelle bewegt sich entlang einer Bahn 81 vor dem Bildschirm 100 (vgl. Fig. 8, 9). Der Bildschirm 100 ist dabei ortsfest aufgestellt. Der Bildschirm 100 oder die Vorrichtung in der er untergebracht ist, ist mit Lichtsensoren 101, 102, 103, 104 und/oder einer Kamera 110 ausgestattet (vgl. Fig. 9). Die Kamera 110 im vorliegenden Fall ist eine fototechnische Apparatur, die statische oder bewegte Bilder auf einem elektronischen oder digitalen Speichermedium aufzeichnen kann.

Bei den Lichtsensoren kann es sich um Sensoren handeln, die bei Einwirkung von Licht ihre elektrischen Eigenschaften ändern. Hierbei kann es sich beispielsweise um einen Fotowiderstand, Fotodiode, Fototransistor, Fotozelle, Photomultiplier oder pyroelektrischen Sensor handeln

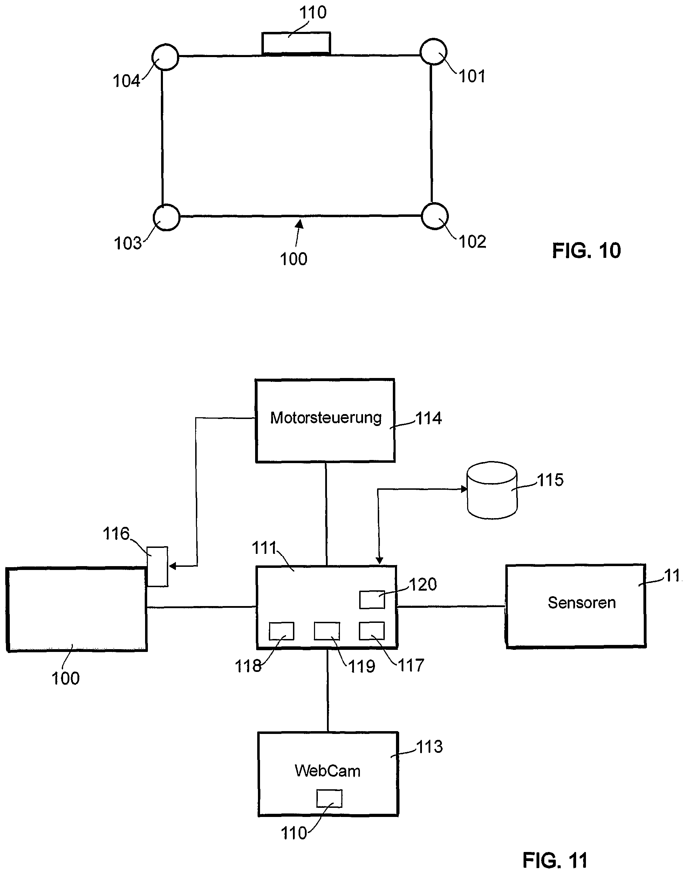

Die Fig. 11 zeigt schematisch Komponenten der Vorrichtung 10 auf, wobei eine zentrale Steuereinheit 111 verbunden ist mit einem Sensormodul 112 sowie einem Kameramodul 113, einem Bildschirm 100 und einer Motorsteuerung 114 zur Adjustierung des Bildschirms 100. Die Motorsteuerung 114 steuert hierbei eine mit dem Bildschirm 100 gekoppelte Antriebseinheit 116. Die zentrale Steuereinheit 111 umfasst weiters Kalibrierungsmittel 117, Monitorwinkelermittlungsmittel 118, Betrachtungswinkelermittlungsmittel 119 sowie Reflexionswinkelermittlungsmittel 120 und ist mit elektronischen Speichermitteln 115 verbunden.

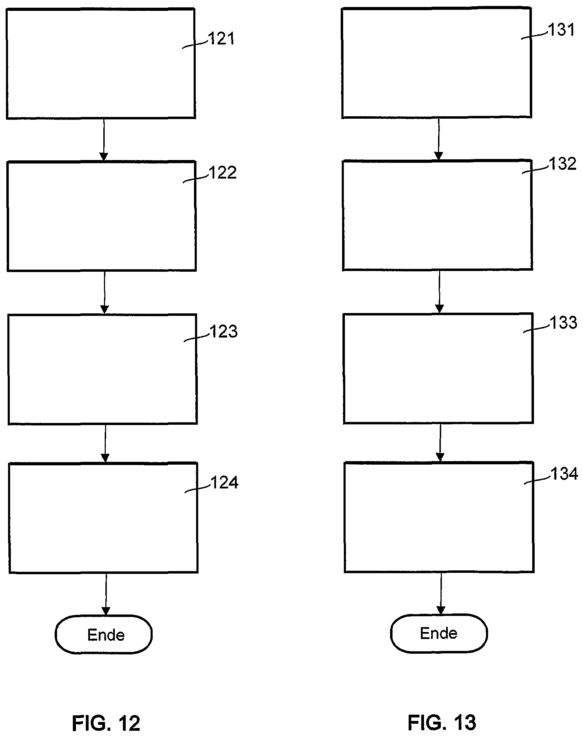

Zunächst wird eine Kalibrierung mit Hilfe der Kalibrierungsmittel 117 vorgenommen. Die Fig. 12 zeigt einen Ablauf der Kalibrierung:
Das Sensormodul 112 umfasst im vorliegenden Fall die Lichtsensoren 101, 102, 103, 104 und gemäß eines Verarbeitungsschrittes 121 wird mit diesen während eines Zeitraumes, beispielsweise eines Tages, die Intensität der Sonneneinstrahlung gemessen. Dabei kommt es nicht unbedingt auf das Maximum bzw. absolute Werte an, sondern auf den relativen Unterschied an den verschiedenen Zeitpunkten. Durch verschiedene Einflüsse (beispielsweise könnten Gebäude während des Tages die Einstrahlung durch Reflexionen beeinflussen) können die ermittelten Messwerte der Lichtsensoren um "Ausreißer" gefiltert werden, wie in Fig. 12 gemäß einem Verarbeitungsschritt 122 dargestellt. Gemäß einem
   Verarbeitungsschritt 123 wird eine Bildung von Differenzwerten pro Zeiteinheit (beispielsweise Minuten) vorgenommen. Gemäß einem Verarbeitungsschritt 124 wird mit Hilfe der Reflexionswinkelermittlungsmittel 120 abhängig von der Tages- und Jahreszeit auf die Position der Sonne bzw. auf den Einstrahlwinkel auf den Bildschirm bzw. die Bildschirmoberfläche geschlossen. Als Ergebnis erhält man die Winkelstellung der Sonne in Relation zum Monitor über die Tageszeit hinweg. Dieser Winkel kann pro Zeiteinheit zum späteren Vergleich elektronisch in den Speichermitteln 115 gespeichert werden. Gegebenenfalls kann im Laufe des Jahres eine erneute Kalibrierung durchgeführt werden (Sonnenstand im Winter ist anders als im Sommer). Die Kalibrierung kann weiters im Prinzip permanent laufen und zu bestimmten Zeitpunkten erneut als Referenz herangezogen werden.

Fig. 13 beschreibt den Ablauf der Veränderung der Bildschirmneigung mit Hilfe der Monitorwinkelermittlungsmittel 118:
Gemäß einem Verarbeitungsschritt 131 wird die aktuelle Tageszeit beispielsweise anhand einer hardwaremäßigen oder softwaremäßigen Echtzeituhr ermittelt sowie der dazu gespeicherte Sonneneinstrahlwinkel aus den Speichermitteln 115 abgerufen, gegebenenfalls erfolgt eine Interpolation, um zu einem nicht gespeicherten Zeit-Winkelwert einen entsprechenden Sonneneinstrahlwinkel zu ermitteln.

Die optimale Sicht auf den Monitor ist nicht nur abhängig von dem Sonneneinstrahlwinkel, sondern auch von der Augenposition des Betrachters zum Monitor (vgl. Fig. 7). Gemäß einem Verarbeitungsschritt 132 ermittelt das Betrachtungswinkelermittlungsmittel 119 mit Hilfe von Bildern der Kamera 110 und einem Gesichtserkennungsalgorithmus die Augen(position) eines vor dem Bildschirm 100 befindlichen Benutzers und berechnet daraufhin den Betrachtungswinkel A, B. Gemäß einem Verarbeitungsschritt 133 wird anhand des ermittelten Betrachtungswinkel und des abgerufenen Sonneneinstrahlwinkels in weiterer Folge ein optimaler Winkel jeweils für die horizontale und vertikale Achse der Monitorausrichtung berechnet und eine solcherweise gewonnene Monitorwinkelverstellinformation an die Motorsteuerung 114 ausgegeben. Gemäß einem Verarbeitungsschritt 134 wird mit Hilfe der Motorsteuerung 114 dann die Einstellung der Neigung des Bildschirms 100 über die Antriebseinheit 116 vorgenommen.

## Patentansprüche

1. Vorrichtung (10) zur Abwicklung von Geldgeschäften, mit einem Gehäuse (11) und einem in einem Gehäuse (11) aufgenommenen Bildschirm (12; 100), wobei der Bildschirm (12; 100) gegenüber dem Gehäuse (11) bezüglich einer horizontalen und/oder einer vertikalen Achse (3, 4, 5; 6, 7, 8; 20, 21, 22; 23, 24, 25; 26, 27) drehbar und/oder
neigbar ist, derart dass ein Verändern der Neigung des Bildschirms (12; 100) automatisiert erfolgt, wobei die Achsen (3, 4, 5; 6, 7, 8; 20, 21, 22; 23, 24, 25; 26, 27) im Wesentlichen in der Ebene der Bildschirmfläche (1) liegen, und mit einer Motorsteuerung (114) zur Adjustierung des Bildschirms (100), wobei die Motorsteuerung (114) eine mit dem Bildschirm (100) gekoppelte Antriebseinheit (116) steuert
**gekennzeichnet durch**
- Betrachtungswinkelermittlungsmittel (119) zum Ermitteln eines Betrachtungswinkels (A, B) eines vor dem Bildschirm (12; 100) befindlichen Benutzers mit Hilfe von Bildern einer Kamera (110) und einem Gesichtserkennungsalgorithmus, und
- Reflexionswinkelermittlungsmittel (120) zum Ermitteln eines Reflexionswinkels einer auf den Bildschirms (12; 100) leuchtenden Strahlungsquelle, wobei abhängig von der Tages- und Jahreszeit auf die Position der Sonne bzw. auf den Einstrahlwinkel auf den Bildschirm (12; 100) bzw. die Bildschirmoberfläche schließbar ist, um die Winkelstellung der Sonne in Relation zum Bildschirm (12; 100) über die Tageszeit hinweg zu bestimmen, wobei eine aktuelle Tageszeit anhand einer hardwaremäßigen oder softwaremäßigen Echtzeituhr ermittelbar sowie der dazu gespeicherte Sonneneinstrahlwinkel aus Speichermitteln (115) abrufbar ist, wobei eine Kalibrierung mit Hilfe von Kalibrierungsmitteln (117) vornehmbar ist und zur Kalibrierung ein Sensormodul (112) Lichtsensoren (101, 102, 103, 104) umfasst, mit denen während eines Zeitraumes, beispielsweise eines Tages, die Intensität der Sonneneinstrahlung messbar ist, und
- Monitorwinkelermittlungsmittel (118) zum Ermitteln einer Monitorwinkelverstellinformation anhand der ermittelten Betrachtungswinkel (A, B) und Reflexionswinkel, die an die Motorsteuerung (114) ausgebbar ist.

2. Vorrichtung nach Anspruch 1, **dadurch gekennzeichnet, dass** der Bildschirm (12; 100) im Wesentlichen senkrecht angeordnet ist.

3. Vorrichtung (10) nach Anspruch 1, **dadurch gekennzeichnet, dass** die horizontale Achse in einem oberen Bereich oder in einem mittigen Bereich oder in einem unteren Bereich des Bildschirms (12; 100) angeordnet ist.

4. Vorrichtung (10) nach einem der Ansprüche 1 bis 3, **dadurch gekennzeichnet, dass** die vertikale Achse in einem seitlich linken Bereich oder in einem mittigen Bereich oder in einem seitlich rechten Bereich des Bildschirms (12; 100) angeordnet ist.

5. Vorrichtung (10) nach einem der vorhergehenden Ansprüche, **dadurch gekennzeichnet, dass** an der Rückseite des Bildschirms ein Kugelgelenk (28) vorgesehen ist zur drehbaren und/oder neigbaren Halterung des Bildschirms (12; 100) an dem Gehäuse (11).

## Claims

1. Device (10) for conducting monetary transactions, comprising a housing (11) and a display screen (12; 100) held in a housing (11), wherein the display screen (12; 100) is rotatable and/or tiltable in relation to the housing (11) with respect to a horizontal and/or vertical axis (3, 4, 5; 6, 7, 8; 20, 21, 22; 23, 24, 25; 26, 27) in such a manner that adjusting the tilt of the display screen (12; 100) takes place automatically, wherein the axes (3, 4, 5; 6, 7, 8; 20, 21, 22; 23, 24, 25; 26, 27) lie substantially in the plane of the display screen surface (1), and comprising a motorized control (114) for adjusting the display screen (100), wherein the motorized control (114) controls a drive unit (116) coupled to the display screen (100),
**characterized by**
- viewing-angle determining means (119) for determining a viewing angle (A, B) of a user located in front of the display screen (12; 100) with the aid of images of a camera (110) and a face recognition algorithm, and
- reflection-angle determining means (120) for determining an angle of reflection of a radiation source illuminating the screen (12; 1000), wherein, depending on the time of day and the season, it is possible to deduce the position of the sun or the angle of incidence on the display screen (12; 100) or the display screen surface, in order to determine the angular position of the sun in relation to the display screen (12; 100) over the course of the day, wherein a current time of day can be determined on the basis of a hardware or software real-time clock and the angle of incidence of the sun stored for that time can be retrieved from storage means (115), wherein a calibration can be performed with the aid of calibrating means (117) and, for calibration, a sensor module (112) comprises light sensors (101, 102, 103, 104), with which the intensity of the solar radiation can be measured during a time period, for example a day, and
- monitor-angle determining means (118) for determining monitor-angle adjustment information on the basis of the determined viewing angles (A, B) and angles of reflection, which can be output to the motorized control (114).

2. Device according to Claim 1, **characterized in that** the display screen (12; 100) is arranged substantially vertically.

3. Device (10) according to Claim 1, **characterized in that** the horizontal axis is arranged in an upper region or in a middle region or in a lower region of the display screen (12; 100).

4. Device (10) according to one of Claims 1 to 3, **characterized in that** the vertical axis is arranged in a laterally left region or in a middle region or in a laterally right region of the display screen (12; 100).

5. Device (10) according to one of the preceding claims, **characterized in that** a ball joint (28) is provided on the rear side of the display screen for the rotatable and/or tiltable mounting of the display screen (12; 100) on the housing (11).

## Revendications

1. Dispositif (10) permettant d'effectuer des opérations financières, avec une enceinte (11) et avec un écran d'affichage (12; 100) installé dans une enceinte (11), dans lequel l'écran d'affichage (12; 100) peut tourner et/ou s'incliner par rapport à l'enceinte (11) autour d'un axe horizontal et/ou vertical (3, 4, 5; 6, 7, 8; 20, 21, 22; 23, 24, 25; 26, 27), de telle manière qu'un changement de l'inclinaison de l'écran d'affichage (12; 100) se produise automatiquement, dans lequel les axes (3, 4, 5; 6, 7, 8; 20, 21, 22; 23, 24, 25; 26, 27) sont situés essentiellement dans le plan de la face (1) l'écran d'affichage, et avec une commande motorisée (114) permettant l'ajustage de l'écran d'affichage (100), dans lequel la commande motorisée (114) commande une unité d'entraînement (116) couplée à l'écran d'affichage (100), **caractérisé par**
- des moyens de détermination de l'angle de vision (119) pour déterminer un angle de vision (A, B) d'un utilisateur se trouvant devant l'écran d'affichage (12; 100) à l'aide d'images d'une caméra (110) et d'un algorithme de reconnaissance faciale, et
- des moyens de détermination de l'angle de réflexion (120) pour déterminer un angle de réflexion d'une source de rayonnement éclairant l'écran d'affichage (12; 100), dans lequel il est possible de déduire, en fonction de l'heure du jour et de la saison, la position du soleil ou l'angle d'incidence sur l'écran d'affichage (12; 100) ou sur la surface de l'écran d'affichage, afin de déterminer la position angulaire du soleil par rapport à l'écran d'affichage (12; 100) par-delà l'heure du jour, dans lequel une heure du jour actuelle peut être déterminée à l'aide d'une horloge temps réel au niveau matériel ou au niveau logiciel et l'angle d'incidence du soleil mémorisé à cet effet peut être appelé à partir de moyens de mémoire (115), dans lequel un calibrage peut être opéré à l'aide de moyens de calibrage (117) et un module de capteurs (112) comprend pour le calibrage des détecteurs de lumière (101, 102, 103, 104), avec lesquels l'intensité du rayonnement solaire peut être mesurée pendant une période de temps par exemple un jour, et
- des moyens de détermination d'un angle de moniteur (118) pour déterminer une information de réglage de l'angle de moniteur à l'aide de l'angle de vision (A, B) et de l'angle de réflexion déterminés, qui peut être transmise à la commande motorisée (114).

2. Dispositif selon la revendication 1, **caractérisé en ce que** l'écran d'affichage (12; 100) est disposé de façon essentiellement verticale.

3. Dispositif (10) selon la revendication 1, **caractérisé en ce que** l'axe horizontal est disposé dans une région supérieure ou dans une région centrale ou dans une région inférieure de l'écran d'affichage (12; 100).

4. Dispositif (10) selon l'une quelconque des revendications 1 à 3, **caractérisé en ce que** l'axe vertical est disposé dans une région latérale gauche ou dans une région centrale ou dans une région latérale droite de l'écran d'affichage (12; 100).

5. Dispositif (10) selon l'une quelconque des revendications précédentes, **caractérisé en ce qu'**il est prévu au dos de l'écran d'affichage une articulation à rotule (28) pour le support tournant et/ou inclinable de l'écran d'affichage (12; 100) sur l'enceinte (11).
